# EUROPÄISCHE PATENTSCHRIFT

(11) **EP 0 678 935 B1**
(45) Veröffentlichungstag und Bekanntmachung des Hinweises auf die Patenterteilung: **13.06.2001**
(21) Anmeldenummer: 95105707.4
(22) Anmeldetag: 15.04.1995
(51) Int. Cl.: H01R 9/26, H02B 1/052

(54) **Schutzleiteranschluss an eine hutförmige Tragschiene**
Groundwire contact for connection to a hatshaped bearing rail
Borne pour conducteur de protection pour connexion à un rail de support en forme de chapeau

(30) Priorität: 18.04.1994 DE 4413029
(43) Veröffentlichungstag der Anmeldung: 25.10.1995
(73) Patentinhaber: Hölscher, Heinrich, D-33098 Paderborn (DE); Conrad, Gerd, D-33104 Paderborn (DE)
(72) Erfinder: Conrad, Gerd, D-33104 Paderborn (DE)
(74) Vertreter: Schirmer, Siegfried, Dipl.-Ing.

(56) Entgegenhaltungen:
- DE-A- 3 339 365
- FR-A- 2 453 508
- FR-A- 2 590 438
- FR-A- 2 593 647
- GB-A- 2 013 993

## Beschreibung

Die Erfindung betrifft einen Schutzleiteranschluß an eine hutförmige Tragschiene, insbesondere für mehretagige Reihenklemmen mit einem Klemmkörper, der mit einem eine erste Kontaktzone aufweisenden Haken einen ersten Schenkel der Tragschiene untergreift, während der Klemmkörper mit einer zweiten Kontaktzone auf dem zweiten Schenkel der Tragschiene aufliegt, und mit einem Klemmhebel, der mit einer zweiten Kontaktzone den zweiten Schenkel der Tragschiene untergreift, und mit einer Klemmschraube, mit der Klemmkörper und Klemmhebel derart gegeneinander bewegbar sind, daß die Schenkel der Tragschiene zwischen den Kontaktzonen des Klemmkörpers und des Klemmhebels eingeklemmt sind.

Durch das Gebrauchsmuster DE-U-78 34 456 ist bereits eine Schutzleiter-Reihenklemme für Hutschienen bekannt, welche die Merkmale des Oberbegriffs des Patentanspruchs 1 aufweist. Durch das Gebrauchsmuster DE-U-77 36 440 ist bekannt, zur Zentrierung des Klemmkörpers Schrägflächen vorzusehen, die benachbarte Kontaktzonen begrenzen, In der DE-C-32 25 855 ist eine Schutzleiter-Reihenklemme mit zwei gleich ausgebildeten Klemmhebeln dargestellt, die mit Kontaktflächen und diese begrenzenden Schrägflächen beim Anziehen der Spannschraube die Hutschiene klammerartig erfassen. Die durch die DE-C-29 14 182 bekannte Mehrfach-Reihenklemme für elektrische Leitungen beschreibt einen Schutzleiteranschluß, bei dem ein Schutzleiter durch eine Klemmschraube an einen der Tragschienenschenkel unter Zwischenlage eines U-förmigen Übertragungsgliedes angeklammert wird, das gleichzeitig als Einsteckbegrenzungsanschlag dient. Ein federelastischer Abschnitt des Isolierstoffgehäuses ist zur Verrastung der Klemme am anderen Tragschienenschenkel vorgesehen.

Die DE-A-33 39 365 beschreibt einen als Wippe ausgebildeten Klemmhebel, der als Auflager für den Schutzleiter dient und beim Anziehen der Klemmschraube unter einen der Tragschienenschenkel drückt. Zwischen der Klemmschraube und dem Schutzleiter ist die Anordnung eines Leiterschutzelements angedeutet.

Die Reihenklemmen der genannten ersten drei Druckschriften kann man als "Einzweck"-Klemmen bezeichnen, da jede Klemme eine Funktion erfüllt, z.B. als Durchgangsklemme, Nulleiterklemme, Schutzleiterklemme usw., die sich dadurch auszeichnen, daß sie die Tragschiene an beiden nach außen gerichteten Schenkeln erfassen, die Klemme auf der Tragschiene ohne Beteiligung der Isoliergehäuse zentrieren, ohne Kräfte aufzubringen, welche die Form der Tragschiene und das Maß, das durch die äußeren Schenkelenden bestimmt ist, verändern. Die Klemmkraft wird durch eine etwa mittig zur Tragschiene angeordnete Schraube aufgebracht. Die Leitungsverbindung erfolgt durch mindestens ein zusätzliches und extra zu betätigendes Klemmelement.

Die beiden oben zuletzt genannten Reihenklemmen gestatten, mehrere Funktionen auszuüben, wie z.B. Leiterdurchgang, Nulleitertrennung und Schutzleiteranschluß. Für solche Klemmen hat sich die Bezeichnung Mehrstock- oder Etagenklemmen eingeführt. Die Etagen sind stufenförmig übereinander angeordnet, um das Anschließen der Leiter praktikabel zu gestalten, Daraus ergibt sich, daß dasjenige Stockwerk, was direkt oberhalb der Tragschiene angeordnet ist, am weitesten über die äußeren Tragschienenschenkel hinausragt. Zugleich ist es naheliegend, dieses Stockwerk für den Schutzleiteranschluß vorzusehen. Darüberhinaus wird mit der Klemmung des Schutzleiters auch die Befestigung der Reihenklemme auf der Tragschiene ermöglicht. Allen diesen bekannten Ausführungen ist gemeinsam, daß sie nur einen Schenkel der Tragschiene klemmen und daß die mechanische Befestigung einseitig auf einem Tragschienenschenkel erfolgt. Damit sind die Vorteile der eingangs beschriebenen Lösungen für die "Einzweck"-Schutzleiterklemme, nämlich Spannen (Kontaktieren) beider Schenkel der Tragschiene, Zentrierung auf der Tragschiene nur durch die Metallteile (ohne die Tragschiene zu verformen) und nicht hilfsweise durch das Isoliergehäuse der Reihenklemme sowie fester mechanischer Sitz, aufgehoben.

Aus der GB-A-2 013 993 ist ein Anschlußblock zum Anschluß von Erdleitern bekannt, wobei der Anschlußblock einen aus zwei gestanzten und gebogenen Blechteilen gebildeten Leiteranschluß aufweist, der mit zwei hakenförmigen Vorsprüngen unter entsprechende Ausnehmungen eines länglichen Anschlußstücks untergreifend einzusetzen ist. Der Anschlußblock wird mit einer Schraube gegenüber dem Anschlußstück verspannt, wonach das Anschlußstück auf eine Tragschiene aufgeklemmt wird.

Der Erfindung liegt daher die Aufgabe zugrunde, einen Schutzleiteranschluß der gattungsgemäßen Art zu schaffen, der bei einem weit über die äußeren Tragschienenschenkel hinausragenden Leiteranschluß die genannten Nachteile vermeidet und beim Anschließen eines Leiters eine sichere mechanische und elektrische Verbindung zu den beiden Schenkeln der Tragschiene herstellt, wie es bei den genannten "Einzweck"-Klemmen der Fall ist.

Die gestellte Aufgabe wird durch die im Kennzeichen des Patentanspruchs 1 angegebenen Merkmale gelöst. Weitere vorteilhafte Merkmale der Erfindung sind in den Unteransprüchen angeführt.

Als weitere Vorteile sind zu nennen:Die Klemmkraft ist unabhängig von dem Querschnitt des anzuschließenden Leiters. Das durch die äußeren Schenkel der Tragschiene gegebene Maß wird nicht beeinträchtigt. Der erfindungsgemäße Schutzleiteranschluß ist ohne Einschränkung auf allen hutförmigen Tragschienen funktionstüchtig, insbesondere auch auf den Tragschienen, deren nach außen abgewinkelte Schenkel einen gewissen Schrägverlauf haben.

Ein Ausführungsbeispiel eines Schutzleiteranschlusses gemäß der Erfindung wird anhand der Zeichnungen erläutert.
Es zeigen:
- Fig. 1: die Anordnung des Schutzleiteranschlusses im Isoliergehäuse einer Mehrstockklemme aufgesetzt auf eine Tragschiene,
- Fig. 2: den Schutzleiteranschluß aufgesetzt auf eine Tragschiene mit einem angeschlossenen Leiter, teilweise geschnitten und
- Fig. 3: die Einzelteile in Explosions-Darstellung.

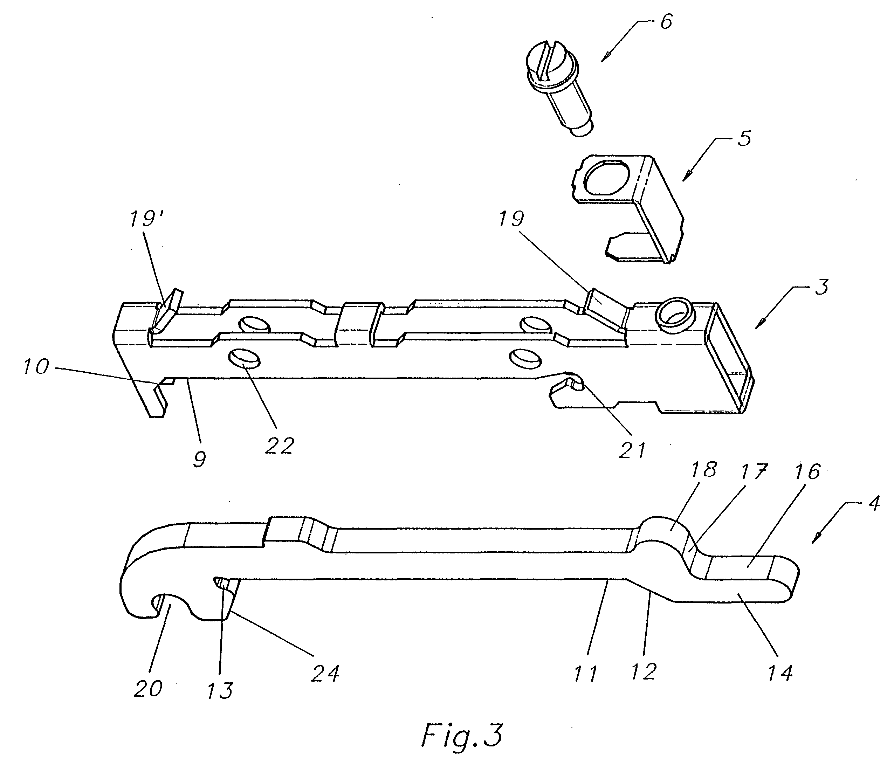

Der Schutzleiteranschluß besteht aus einem Klemmkörper 3 (Fig. 3), der in bekannter Weise als Hohlkörper aus Blech durch Stanzen und Biegen hergestellt wird. In das in diesem Klemmkörper vorhandene Gewinde ist eine Klemmschraube 6 eingeschraubt, der ein Leiterschutzelement 5 zugeordnet ist. Im Bereich der Klemmschraube ist der Klemmkörper kastenförmig geschlossen , während im Bereich der Auflage auf die Tragschiene 2 ein U-Profil gebildet ist. Der Klemmkörper 3 hat einen Haken 7, der die Unterseite des nach außen abgewinkelten ersten Tragschienenschenkels 2.1 untergreift, wobei der Haken sich auf der gleichen Seite, von der Tragschiene 2 aus gesehen, wie die Klemmschraube befindet. Der Klemmkörper 3 erstreckt sich über den zweiten nach außen gerichteten Tragschienenschenkel 2.2 hinaus und liegt hier mit seiner Kontaktzone 9 auf dem Schenkel auf, wobei der Beginn der abgehenden Schräge 10 auf das Maß der Tragschiene abgestimmt ist. Auf der anderen Seite wird das lichte Maß, das der Tragschienenabmessung entspricht, durch die Fläche 21 am Hakenfuß bestimmt. In den senkrecht auf den Tragschienenschenkeln stehenden Seitenwänden des U-Profils sind Bohrungen 22 oder auch rechteckförmige Ausschnitte angebracht, in die entsprechende Vorsprünge des Isoliergehäuses der Mehrstockklemme eingreifen und somit eine Fixierung des Schutzleiteranschlusses bewirken. Diesem Zweck dienen auch die beiden abgewinkelten Laschen 19,19'.

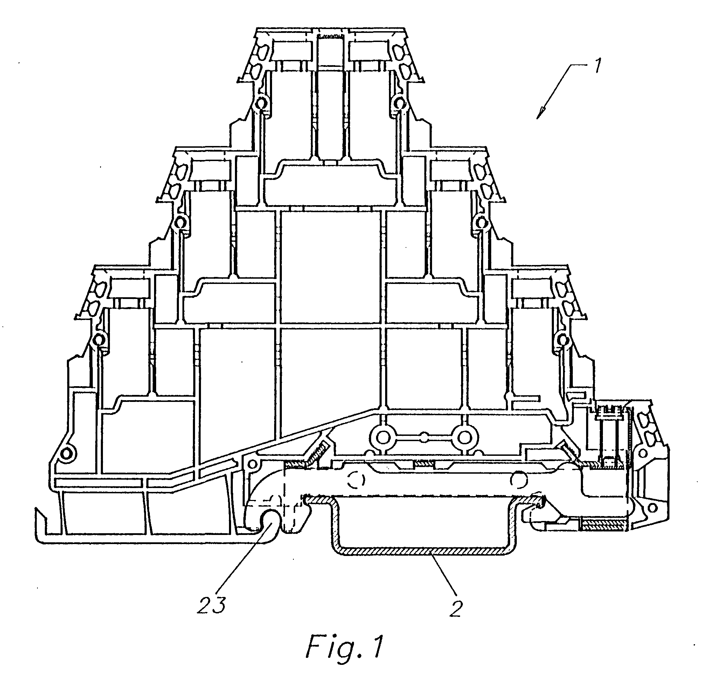

Im Klemmkörper 3 des Schutzleiteranschlusses ist ein Klemmhebel 4 angeordnet, der sich einerseits bis in den Bereich der Klemmschraube 6 und andererseits über beide nach außen gerichteten Schenkel 2.1, 2.2 der Tragschiene 2 und darüber hinaus erstreckt. Der Klemmhebel 4 hat eine erste Kontaktzone 11, die auf dem ersten Tragschienenschenkel 2.1 aufliegt und die am äußeren Ende des ersten Tragschienenschenkels durch eine Schräge 12 begrenzt wird. Der Klemmhebel 4 hat eine zweite Kontaktzone 13, die den zweiten Tragschienenschenkel 2.2 an seinem äußeren Ende untergreift. Die zweite Kontaktzone 13 wird einerseits durch eine Fläche begrenzt, die am äußeren Ende des zweiten Tragschienenschenkels 2.2 anliegt und andererseits durch eine im spitzen Winkel nach unten gehende Fläche 24. Die Schräge 12 geht in einen Ansatz 14 über, der auf seiner Oberseite eine Klemmfläche 16 bildet. Die Klemmfläche ist symmetrisch unter der Klemmschraube 6 angeordnet und so dimensioniert, daß ein anzuschließender Leiter 15 sicher geklemmt wird. Tragschienenseitig wird die Klemmfläche 16 durch eine senkrecht abgehende Fläche 17 begrenzt, die den Durchsteckschutz für den Leiter 15 bildet und in eine gewölbte Fläche 18 übergeht. Außerhalb der Tragschiene 2 und jenseits der zweiten Kontaktzone 13 ist eine Ausklinkung 20 angeordnet. In diese Ausklinkung gereift ein vorgespanntes an das aus elastischem Material bestehende Isoliergehäuse angesprittztes Federelement 23 (Fig.1).

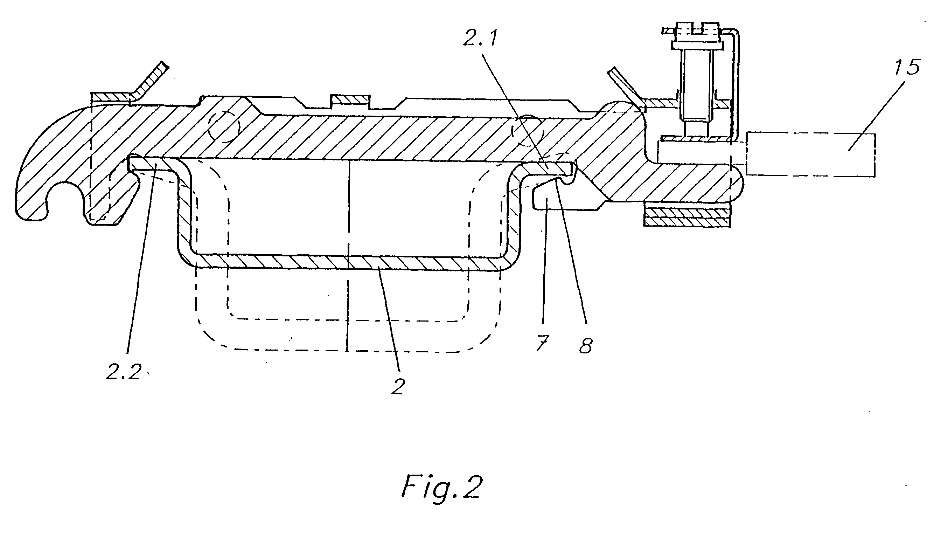

Die Reihenklemme mit dem eingebauten Schutzleiteranschluß wird so auf die Tragschiene 2 aufgesetzt, daß der Haken 7 (Fig.2) unter den ersten Tragschienenschenkel 2.1 geschoben wird, während die Fläche 24 des Klemmhebels 4 auf der äußersten Kante des zweiten Tragschienenschenkels 2.2 aufliegt.

Wird nun Druck auf die Klemme ausgeübt, so gleitet die Fläche 24 an der Kante des zweiten Tragschienenschenkels 2.2 entlang und verschiebt den Klemmhebel quer zur Tragschiene 2. Die Schräge 12 des Klemmhebels wird an der Kante des gegenüberliegenden ersten Tragschienenschenkels 2.1 entlang gezogen und hebt somit den Klemmhebel 4 an dieser Seite etwas an. Ist der Klemmhebel soweit quer verschoben, daß die durch die Fläche 24 und die Fläche der Kontaktzone 13 gebildete Spitze den äußeren Rand der Tragschiene 2 passiert hat, so wird der Klemmhebel 4 durch das Federelement 23 wieder in die ursprüngliche Lage zurückgeschoben. Der Klemmhebel 4 gleitet dabei mit der gewölbten Fläche 18 an der einen abgewinkelten Lasche 19 des Klemmkörpers 3 entlang und liegt somit wieder an der ersten Kontaktzone 11 auf dem ersten Tragschienenschenkel 2.1 der Tragschiene 2 auf. Damit ist sichergestellt, daß der für den anzuschließenden Leiter 15 erforderliche Klemmraum gewährleistet ist. Die Reihenklemme ist jetzt auf der Tragschiene unverlierbar fixiert.

Wird der Leiter 15 durch Anziehen der Klemmschraube 6 zwischen dem Leiterschutzelement 5 und der Klemmfläche 16 des Klemmhebels 4 gespannt, so wird sich der Klemmkörper 3 relativ zur Tragschiene heben und der Klemmhebel 4 senken. Der nach außen gerichtete erste Tragschienenschenkel 2.1 der Tragschiene 2 wird zwischen der ersten Kontaktzone 8 des Klemmkörpers 3 und der ersten Kontaktzone 11 des Klemmhebels 4 eingeklemmt. Wird die Klemmschraube 6 weitergedreht, so wird sich der Klemmhebel im Uhrzeigersinn drehen, das Widerlager sird durch den Schnittbereich der Flächen der Kontaktzone 11 und der Schräge 12 an der äußeren oberen Kante des ersten Tragschienenschenkels 2.1 gebildet. Ein weiteres Widerlager bildet die Fläche der ersten Kontaktzone 8 des Klemmkörpers 3 mit der unteren Fläche des ersten Tragschienenschenkels 2.1, wobei sich der Klemmkörper 3 gegen den Uhrzeigersinn dreht. Daraus ergibt sich, daß die Fläche der zweiten Kontaktzone 9 des Klemmkörpers 3 von oben gegen den zweiten Tragschienenschenkel 2.2 gedrückt wird, während die Fläche der zweiten Kontaktzone 13, des Klemmhebels 4 , von unten gegen den zweiten Tragschienenschenkel 2.2 gedrückt wird.

## Patentansprüche

1. Schutzleiteranschluß an eine hutförmige Tragschiene (2), insbesondere für mehretagige Reihenklemmen mit einem Klemmkörper (3), der mit einem eine erste Kontaktzone (11) aufweisenden Haken (7) einen ersten Schenkel (2.1) der Tragschiene (2) untergreift, während der Klemmkörper (3) mit einer zweiten Kontaktzone (9) auf dem zweiten Schenkel (2.2) der Tragschiene (2) aufliegt, und mit einem Klemmhebel (4), der mit einer zweiten Kontaktzone (13) den zweiten Schenkel (2.2) der Tragschiene (2) untergreift, und mit einer Klemmschraube (6), mit der Klemmkörper (3) und Klemmhebel (4) derart gegeneinander bewegbar sind, daß die Schenkel (2.1, 2.2) der Tragschiene (2) zwischen den Kontaktzonen (11,9; 13) des Klemmkörpers (3) und des Klemmhebels (4) eingeklemmt sind, dadurch gekennzeichnet, daß die zweite Kontaktzone (9) des Klemmkörpers (3) an dem zweiten Schenkel (2.2) der Tragschiene (2) durch eine Klemmkörperschräge (10) begrenzt ist, daß der Klemmhebel (4) mit der durch eine Klemmhebelschräge (12) begrenzten ersten Kontaktzone (11) auf dem ersten Schenkel (2.1) der Tragschiene (2) aufliegt und mit der zweiten Kontaktzone (13) den zweiten Schenkel (2.2) der Tragschiene (2) untergreift, wobei die erste Kontaktzone (11) des Klemmhebels (4) einer ersten Kontaktzone (8) des Klemmkörpers (3) und die zweite Kontaktzone (13) des Klemmhebels (4) der zweiten Kontaktzone (9) des Klemmkörpers (3) zugeordnet ist.

2. Schutzleiteranschluß nach Anspruch 1, dadurch gekennzeichnet, daß am Klemmhebel (4) eine gewölbte Fläche (18) im Anschluß an eine an sich bekannte als Durchsteckschutz dienende und an die Klemmfläche (16) angrenzende Fläche (17) vorgesehen ist, die mit einem durch eine abgebogene Lasche (19) am Klemmkörper (3) gebildeten Führungselement zusammenwirkt.

3. Schutzleiteranschluß nach den Ansprüchen 1 und 2, dadurch gekennzeichnet, daß im Klemmkörper (3) oberhalb der Klemmfläche (16) des Klemmhebels (4) ein von der Klemmschraube (6) geführtes Leiterschutzelement (5) vorgesehen ist.

## Claims

1. Protective conductor connection to a hat-shaped mounting rail (2), especially for multi-tiered line-up terminals, with a clamping body (3) which engages under a first limb (2.1) of the mounting rail (2) by a hook (7) having a first contact zone (11), whilst the clamping body (3) bears on the second limb (2.2) of the mounting rail (2) by a second contact zone (9), and with a clamping lever (4) which engages under the second limb (2.2) of the mounting rail (2) by a second contact zone (13), and with a clamping screw (16) by which the clamping body (3) and clamping lever (4) are movable relative to one another in such a manner that the limbs (2.1, 2.2) of the mounting rail (2) are clamped between the contact zones (11, 9; 13) of the clamping body (3) and clamping lever (4), characterised in that the second clamping zone (9) of the clamping body (3) is bounded at the second limb (2.2) of the mounting rail (2) by a clamping body chamfer (10), that the clamping lever (4) bears on the first limb (2.1) of the mounting rail (2) by the first contact zone (11) bounded by a clamping lever chamfer (12) and engages under the second limb (2.2) of the mounting rail (2) by the second contact zone (13), wherein the first contact zone (11) of the clamping lever (4) is associated with a first contact zone (8) of the clamping lever (3) and the second contact zone (13) of the clamping lever (4) is associated with the second contact zone (9) of the clamping body (3).

2. Protective conductor connection according to claim 1, characterised in that provided at the clamping lever (4) is an arched surface (18) connecting to a surface (17) which is known per se, serves as a plug-through protection, adjoins the clamping surface (16) and co-operates with a guide element formed by a bent tongue (19) at the clamping body (3).

3. Protective conductor connection according to claims 1 and 2, characterised in that a conductor protective element (5) guided by the clamping screw (6) is provided in the clamping body (3) above the clamping surface (16) of the clamping lever (4).

## Revendications

1. Raccord de conducteur de protection sur un rail porteur (2) en forme de chapeau, en particulier pour pinces en série multiétagées, comprenant :
- un corps de pince (3) qui, par un crochet (7) présentant une première zone de contact (11) saisit par-dessous une première aile (2.1) du rail porteur (2) et qui, par une seconde zone de contact (9) est appliqué sur la seconde aile (2.2) du rail porteur (2),
- un levier de pince (4) dont une seconde zone de contact (13) saisit par en dessous la seconde aile (2.2) du rail (2), et
- une vis de serrage (6) qui déplace le corps de pince (3) et le levier de pince (4) l'un par rapport à l'autre de manière que les ailes (2.1 et 2.2) du rail porteur (2) sont pincées entre les zones de contact (11, 9 ; 13) du corps de pince (3) et du levier de pince (4) respectivement,
caractérisé en ce que
- la seconde zone de contact (9) du corps de pince (3) est délimitée, le long de la seconde aile (2.2) du rail porteur (2) par une pente (10),
- le levier de pince (4) par sa première zone de contact (11) délimitée par une pente (12) est appliqué sur la première aile (2.1) du rail porteur (2) et, par sa seconde zone de contact (13) saisit par-dessous la seconde aile (2.2) du rail porteur (2),
- la première zone de contact (11) et la seconde zone de contact (13) du levier de pince (4) sont associées respectivement à une première zone de contact (8) et à la seconde zone de contact (9) du corps de pince (3).

2. Raccord selon la revendication 1,
caractérisé en ce que
sur le levier de pince (4) une portée bombée (18) raccordée à une portée (17) servant, de manière connue en soi, de protection d'enfoncement et de limite à la portée de pince (16), coopère avec un élément de guidage constitué par une patte pliée (19) que porte le corps de pince (3).

3. Raccord selon l'une quelconque des revendications 1 et 2,
caractérisé en ce que
dans le corps de pince (3), au-dessus de la portée (16) du levier de pince (4) se trouve un élément de protection de conducteur (5) maintenu par la vis de serrage (6).
